# EUROPEAN PATENT SPECIFICATION

(11) **EP 1 974 086 B1**
(45) Date of publication and mention of the grant of the patent: **11.03.2009**
(21) Application number: 06841453.1
(22) Date of filing: 19.12.2006
(51) Int. Cl.: D06F 39/08, A47L 15/42, F16L 51/00, F16L 11/11, F16L 25/00

(54) **A WASHER**
WASCHVORRICHTUNG
MACHINE A LAVER

(30) Priority: 30.12.2005 TR 200505410
(43) Date of publication of application: 01.10.2008
(73) Proprietor: Arçelik Anonim Sirketi, 34950 Istanbul (TR)
(72) Inventor: OKUTAN, Omer Hakan, 34950 Istanbul (TR)
(74) Representative: Okat, Tolga
(86) International application number: PCT/EP2006/069907
(87) International publication number: WO 2007/077123

(56) References cited:
- EP-A- 0 527 297
- EP-A- 1 462 561
- GB-A- 824 804
- US-A- 5 704 401
- US-B1- 6 223 777

## Description

This invention relates to a washer comprising a hose that prevents the operational vibrations occuring in the washing tub from being transmitted to the body.

In washers such as washing machines, dishwashers etc., the water in the washing tub is transferred to a pump by means of a hose in order to be drained out or to provide the washing cycle. One end of the hose is fixed to the washing tub as the other end is fixed to the pump. During the washing process, the hose is influenced by the dynamic motions generated by the moving parts inside the machine. As those dynamic vibrations are required not to be transmitted to the body of the machine, the hose is desired to be as flexible as possible but durable at the same time. If the hose is not flexible, it shortens the service life of the hose and causes noise and vibration inside the machine since the motion is transmitted to the body.

In state-of-the-art European Patent Application no EP0527297, a hose comprising more than one bellows having two side walls inclined towards each other at unequal angles is explained.

In prior art embodiments, the bellows placed on the hose provide flexibility, but they also cause a decrease in the motional flexibility of the hose by supporting each other as a result of the unequal angles between the side walls of the bellows. This increases the force transmission between the tub and the pump and causes the vibration of the tub to be transmitted to the body.

The object of this invention is the realization of a washer comprising a hose that minimizes the transmission of vibrations that occur inside the washing tub to the body.

The washer realized in order to fulfill the objectives of this invention, explicated in the first claim and the dependant claims thereof, comprises a hose having a flexible bellows-like stricture, having one of its ends connected to the washing tub, the other end to the pump, providing to minimize the transmission of the the washing tub movements to the pump during operation, having crests and valleys that surround it.

The cross-sectional area of the hose is fixed and it is determined by either the amount of the water to be transferred into the washing cycle or the water to be drained. Although the cross-sectional area of the hose of the present invention on the valleys remains constant, the shape of the cross-section on valleys changes from quadrilateral into circular from the washing tub towards the pump. Thus, the end of the hose connected to the washing tub where more movement is observed is provided to be affected least from the vibrations as the other end connected to the pump is provided to absorb the vibrations so as not to transmit.

The valleys on the hose between the crests, connecting the crests to each other, determine the maximum length of the hose. Furthermore, they facilitate the water flow inside the hose when the hose is contracted or stretched.

In another embodiment of present invention, the heights of the crests on the hose are not constant, increasing towards the end of the hose connected to the pump from the other end of the hose connected to the washing tub. Thus, one end of the hose connected to the washing tub is provided to possess less flexibility than the other end of the hose connected to the pump, so as to maintain the hose to be affected least from the movements of the washing tub.

In another embodiment of present invention, the hose comprises crests whose one side-wall makes a wide angle with the central axis of the hose as the other is almost perpendicular to the central axis of the hose. While the perpendicular side-wall provides the vertical forces acting on the hose to be attenuated, the side-wall with wide angle provides the forces on the horizantal axis to be damped by transfering them to the next bellows.

By way of this invention, both the flexibility and the durability of the hose is increased so as to provide minimum transmission of noise and vibration caused by the motion of the washing tub to the body. Furthermore, this invention enables the production of more flexible hoses from a harder material.

The washer realized in order to fulfill the objectives of this invention is illustrated in the attached figures, where :

Figure 1 - Is the perspective view of a washer.

Figure 2 - Is the perspective view of a washing tub, a pump, and a hose.

Figure 3 - Is the perspective view of the hose.

Figure 4 - Is the top view of the hose.

Figure 5 - Is the side view of the hose.

Figure 6 - Is the cross-sectional view of the detail-D of the hose.

Elements shown in figures are numbered as follows :
1. Washer
2. Washing tub
3. Hose
4. Pump
5. Gest
6. , 16.Side-wall
7. Valley

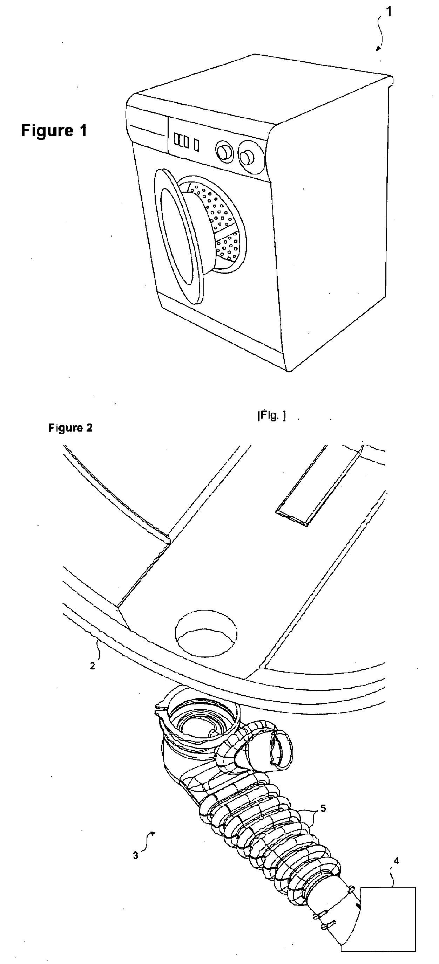

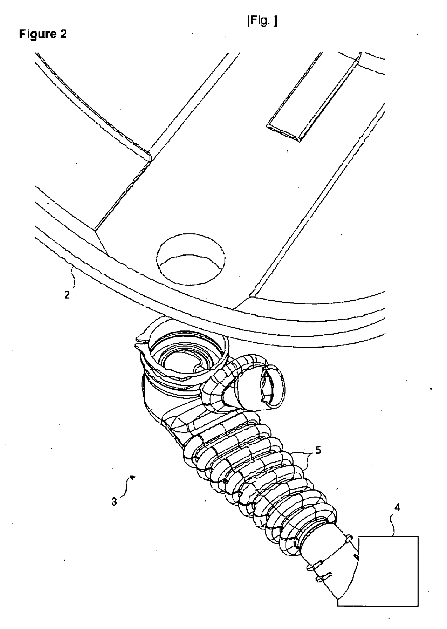

The washer (1) of the present invention comprises of a body, a washing tub (2) into which the laundry to be washed is placed, a pump (4) fixed to the body, providing the water in the washing tub (2) either to be included in washing circle or to be drained, and a hose (3) having one of its ends connected to the washing tub (2) which moves as the other is connected to the pump (4) which is fixed to the body so as to provide to transfer the water inside the washing tub (2) to the pump (3) (Figure 1 and Figure 2).

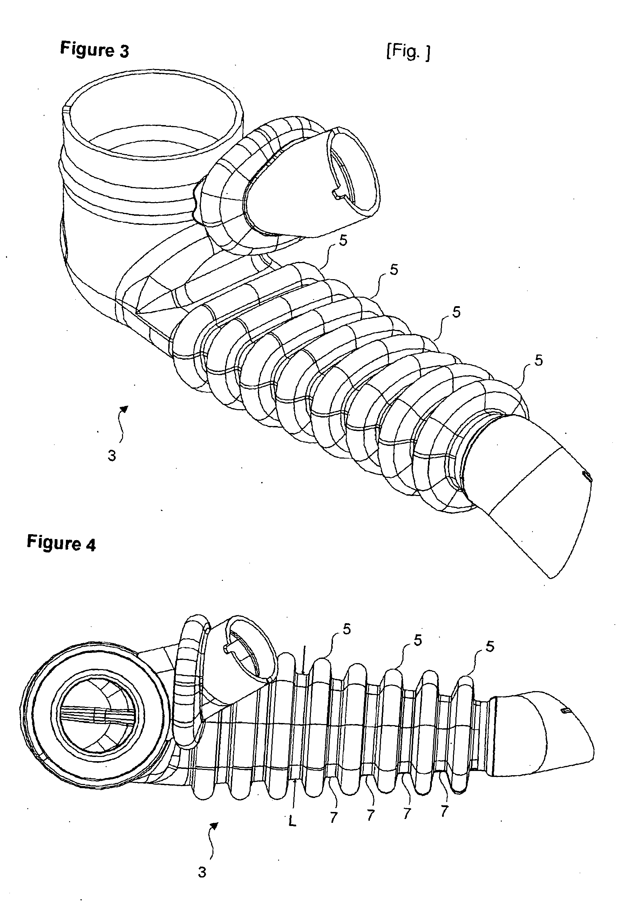

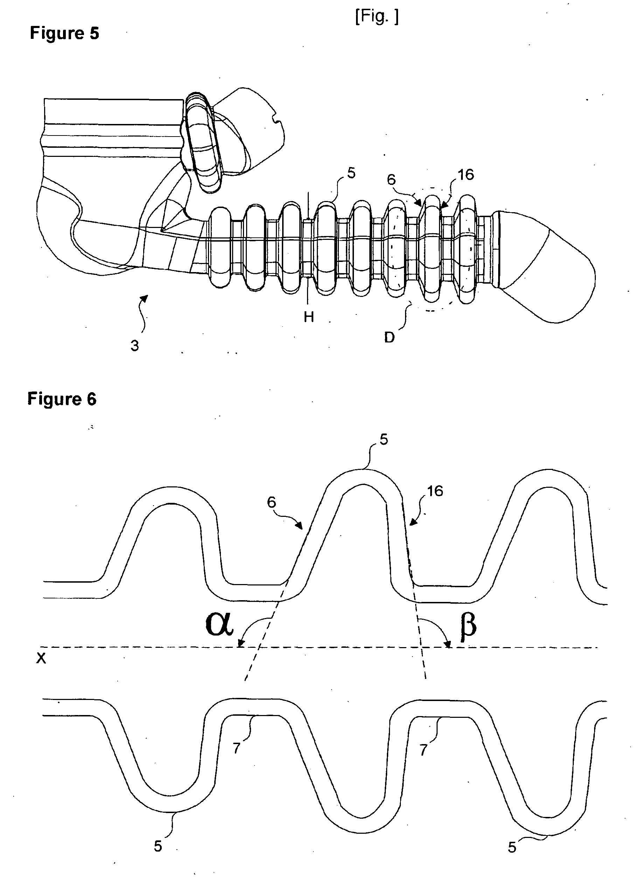

The hose (3) comprises more than one crest (5) that surround it and one or more valleys (7) among the crests (5) so as to connect the crests (5) to each other. The hose (3) has a flexible, bellows-like structure which damps the motion created by the washing tub (2) during its operation without being damaged by being broken, cracked etc. in order to prevent the motion from being transmitted to the pump (4) and to the body to which the pump (4) is fixed (Figure 4 and Figure 5).

The crests (5) and the valleys (7) between the crests (5) contract or stretch so as to provide the hose (3) to be used in machines having different distances between the washing tub (2) and the pump (4). Besides, it provides the water to flow smoothly inside the hose (3) without any disturbance when the length of the hose (3) is minimized by contracting or maximized by stretching.

The cross-sectional area of the hose (3) on the valleys (7) remains constant along the hose (3), but the shape of the cross-section on the valleys (7) changes from the washing tub (2) towards the pump (4).In this embodiment, the cross-sectional shape of the hose (3) changes from quadrilateral into circular from the washing tub (2) towards the pump (4).

The cross-section of the hose (3) on the valleys (7) near the washing tub (2) where less vibration is required is quadriletarel with rounded edges, and the edges of this form effected by the force in the direction of the maximum vibrational amplitude are shorter than the other edges. The cross-section of the hose (3) on the valleys (7) near the pump (4) where more vibration is reqired is almost circular so as to absorb the motion in any direction. Thus, the end of the hose (3) connected to the washing tub (2) where more movement is observed is provided to be affected least as the other end connected to the pump (4) is provided not to transmit the vibration to the pump (4) by attenuating it.

In this embodiment, as the vertical height (H) of the edge of the quadrilateral cross-section of the hose (3) on the valley (7) near the washing tub (2) is shorter than the horizontal width (L), the dominant vibration of the washing tub (2) on the vertical direction has less effect on the hose (3) than the vibration on the horizontal direction and is damped by means of the crests (5) and valleys (7). As that part of the hose (3) which is connected to the pump (4) is circular, the vibration that affects the hose (3) in any direction is attempted to be damped by means of the crests (5) and the valleys (7) and the hose (3) is provided to be minimally affected. Thus, despite the fact that the vertical motion of the washing tub (2) is transmitted less to the hose (3) by means of the quadrilateral form of the cross-section of the valley (7) near the washing tub (2), the motions somehow transmitted to the hose (3) are absorbed and transmitted less to the pump (4).

In another embodiment of present invention, the heights of the crests (5) on the hose (3) are not constant, but they increase from the washing tub (2) towards the pump (4). Thus, as the part of the hose (3) which is attached to the washing tub (2) flexes less than that of the other part which is attached to the pump (4), the hose (3) is provided to be affected least from the motions of the washing tub (3). Besides, by way of increasing the flexibility of the end of the hose (3) attached to the pump (4) - even the ends that are fixed to the washing tub (2) and the pump (4) are in different directions and the distance between them is variable - attaching the hose (3) to the washing tub (2) and the pump (4) is provided without restricting the flow of the fluid inside.

In another embodiment of present invention, the crest (5) comprises a side-wall which is almost perpendicular (â) to the central axis of the hose (3) and a second side-wall which makes a wide angle (á) with the central axis of the hose (3) (Figure 6). In this embodiment of the present invention, the inclination (á) of the wide angled side-wall (16) on the hose (3) increases from the washing tub (2) towards the pump (4).

The right-angled side-wall (6) of the crest (5) resists against the vertical components of the force that affects the hose (3), and provides the attenuation of the vertical forces by preventing the crest (5) from being flexed too much. In order to prevent the hose (3) from being damaged, the wide-angled side-wall (16) absorbs the forces by changing its angle depending on the force that affects the hose (3) and by flexing and discreasing the distance between the neighboring crest (5) and itself. Thus, when a force is transmitted to the hose (3), the vertical component of the force is absorbed by the right-angled side-wall (6) of the crest (5), and the horizontal component is absorbed by being transferred to the neighboring crest (5) by means of the wide-angled side-wall (16).

The horizontal forces acting on the hose (3), providing the crests (5) to get close to each other, also provide the wide-angled side-wall (16) of the crest (5) and the right-angled side-wall (6) of the neighboring crest (5) to get close to each other. As the right-angled side-wall (6) of the crest (5) performs no resistance against the horizontal forces, the wide-angled side-wall (16) enables the valley (7) between the two neighboring crests (5) to move towards the crest (5) by pushing the right-angled side-wall (6) of the other crest (5) and provides the neighboring crests (5) to converge each other and have minimum heights. In this case, an observer who is looking at the hose (3) from outside can not see the valleys (7) but just the crests (5) pressed on each other.

By way of this invention, by enhancing both the flexibility and the durability of the hose (3), the transmission of the motion of the washing tub (2) to the body without causing any noise and vibration is provided, and hoses (3) made of harder materials are provided to be more flexible.

## Claims

1. A washer (1) comprising a body, a washing tub (2) into which the laundry to be washed is placed, a pump (4) fixed to the body providing the water in the washing tub (2) either to be drained or to be recirculated during the washing cycle, and a hose (3) having one or more crests (5) and one or more valleys (7) located between the crests (5) so as to connect the crests (5) to each other, one end of the hose (3) being fastened to the washing tub (2) which moves and the other end to the pump (4) which is fixed to the body, **characterized in that** the cross-sectional area of the hose (3) on the valleys (7) is constant whereas the cross-sectional form of the hose (3) on the valleys (7) changes from the washing tub (2) towards the pump (4).

2. A washer (1) as in Claim 1, **characterized by** a hose (3) in quadrilateral form having rounded edges, and having the edges of the cross-section on the valleys (7) near the washing tub (2), which are affected by the force on the direction of the maximum vibrational amplitude, shorter than the other edges.

3. A washer (1) as in Claim 1 or 2 , **characterized by** a hose (3) having a circular cross-section on the valleys (7) near the pump (4).

4. A washer (1) as in Claim 1, **characterized by** a hose (3) having a structure that changes from quadrilateral into circular between the washing tub (2) and the pump (4).

5. A washer (1) as in any one of the above Claims, **characterized by** a hose (3) comprising crests (5) having heights (T) increasing from the washing tub (2) towards the pump (4)

6. A washer (1) as in any one of the above Claims, **characterized by** a crest (5) which comprises a side-wall (6) that is almost perpendicular (â) to the central axis (X) of the hose (3) and a second side-wall (16) that makes a wide-angle (á) with the central axis (X) of the hose (3).

7. A washer (1) as in Claim 6, **characterized by** wide-angled side-walls (16) on the hose (3) having inclinations (á) increasing from the washing tub (2) to the pump (4).

## Patentansprüche

1. Waschmaschine (1), umfassend einen Grundkörper, einen Waschbehälter (2), in den die zu waschende Wäsche gelegt wird, eine Pumpe (4), die am Grundkörper fixiert ist und die vorsieht, das Wasser im Waschbehälter (2) entweder abzulassen oder während des Waschvorgangs zu rezirkulieren, und einen Schlauch (3), der einen oder mehrere Wülste (5) und eine oder mehrere Vertiefungen (7) aufweist, die zwischen den Wülsten (5) angeordnet sind, derart, dass die Wülste (5) miteinander verbunden sind, wobei ein Ende des Schlauchs (3) an dem Waschbehälter (2) befestigt ist, welcher sich bewegt, und das andere Ende an der Pumpe (4), die fest am Grundkörper angeordnet ist, **dadurch gekennzeichnet, dass** die Querschnittfläche des Schlauchs (3) an den Vertiefungen (7) konstant ist, während sich die Querschnittform des Schlauchs (3) an den Vertiefungen (7) vom Waschbehälter (2) zur Pumpe (4) hin verändert.

2. Waschmaschine (1) nach Anspruch 1, **dadurch gekennzeichnet, dass** der Schlauch (3) eine vierseitige Form mit abgerundeten Kanten aufweist, wobei die Kanten des Querschnitts an den Vertiefungen (7) nahe dem Waschbehälter (2), auf die die Kraft in Richtung der maximalen Vibrationsamplitude einwirkt, kürzer sind als die übrigen Kanten.

3. Waschmaschine (1) nach Anspruch 1 oder 2, **dadurch gekennzeichnet, dass** der Schlauch (3) an den Vertiefungen (7) nahe der Pumpe (4) einen kreisförmigen Querschnitt aufweist.

4. Waschmaschine (1) nach Anspruch 1, **dadurch gekennzeichnet, dass** der Schlauch (3) einen Aufbau aufweist, der sich zwischen dem Waschbehälter (2) und der Pumpe (4) von vierseitig zu kreisförmig verändert.

5. Waschmaschine (1) nach einem der vorangehenden Ansprüche, **dadurch gekennzeichnet, dass** der Schlauch (3) Wülste (5) der Höhe (T) umfasst, welche von dem Waschbehälter (2) zur Pumpe (4) hin zunimmt.

6. Waschmaschine (1) nach einem der vorangehenden Ansprüche, **dadurch gekennzeichnet, dass** ein Wulst (5) eine Seitenwand (6) umfasst, die nahezu senkrecht (ä) zur Mittelachse (X) des Schlauchs (3) verläuft, und eine zweite Seitenwand (16), die mit der Mittelachse (X) des Schlauchs (3) einen weiten Winkel (à) bildet.

7. Waschmaschine (1) nach Anspruch 6, **dadurch gekennzeichnet, dass** die weitwinkligen Seitenwände (16) am Schlauch (3) Neigungen (à) aufweisen, die vom Waschbehälter (2) zur Pumpe (4) hin zunehmen.

## Revendications

1. Une machine à laver (1) comprenant un corps, une cuve de lavage (2) dans laquelle le linge à laver est placé, une pompe (4) fixée au corps pour fournir de l'eau dans la cuve de lavage (2) ainsi que pour vidanger ou recycler l'eau au cours du cycle de lavage, et un tuyau (3) ayant un ou plusieurs crêtes (5) et une ou plusieurs vallées (7) situé entre les crêtes (5) afin de connecter les crêtes (5) les uns aux autres, un extrémité du tuyau (3) qui se déplace, étant fixé à la cuve de lavage (2), et l'autre extrémité à la pompe (4), qui est à son tour fixée au corps, **caractérisée en ce que** la section transversale du tuyau (3) sur les vallées (7) est constante alors que la forme de section transversale du tuyau (3) sur les vallées (7) évolue de la cuve de lavage (2) vers la pompe (4).

2. Une machine à laver (1) selon la Revendication 1, **caractérisée par** un tuyau (3) en forme d'un quadrilatère dont les bords sont arrondis, et les bords de la section transversale sur les vallées (7), tout en étant près de la cuve de lavage (2), étant touchés par la force issue de la direction de l'amplitude vibratoire maximale, du fait qu'ils sont plus courts que les autres bords.

3. Une machine à laver (1) selon la Revendication 1 ou 2, **caractérisée par** un tuyau (3) ayant une section transversale sur les vallées (7) près de la pompe (4).

4. Une machine à laver (1) selon la Revendication 1, **caractérisée par** un tuyau (3) ayant une forme quadrilatérale qui évolue du quadrilatère vers le circulaire entre la cuve de lavage (2) et la pompe (4).

5. Une machine à laver (1) selon l'une des Revendications précédentes, **caractérisée par** un tuyau (3) comprenant des crêtes (5) qui ont des hauteurs (T) augmentant de plus en plus à partir de la cuve de lavage (2) vers la pompe (4).

6. Une machine à laver (1) selon l'une quelconque des Revendications précédentes, **caractérisée par** des crêtes (5) comprenant un mur latéral (6) quasi perpendiculaire (à) à l'axe central (X) du tuyau (3) et un second mur latéral (16) qui forme un grand angle (à) avec l'axe central (X) du tuyau (3).

7. Une machine à laver (1) selon la Revendication 6, **caractérisée par** un mur latéral (16) à grand angle sur le tuyau (3), ayant des inclinaisons (à) augmentant de plus en plus à partir de la cuve de lavage (2) vers la pompe (4).
